# EUROPÄISCHE PATENTSCHRIFT

(11) **EP 2 840 294 B1**
(45) Veröffentlichungstag und Bekanntmachung des Hinweises auf die Patenterteilung: **27.01.2021**
(21) Anmeldenummer: 13181203.4
(22) Anmeldetag: 21.08.2013
(51) Int. Cl.: F16N 29/04, F16N 7/38

(54) **ZENTRALSCHMIERVERTEILERSYSTEM EINER THERMOFORMMASCHINE**
CENTRAL LUBRICATION DISTRIBUTOR SYSTEM OF A THERMOFORMING MACHINE
SYSTÈME DE DISTRIBUTION DE LUBRIFIANT CENTRAL D'UNE MACHINE DE THERMOFORMAGE

(43) Veröffentlichungstag der Anmeldung: 25.02.2015
(73) Patentinhaber: Gabler Thermoform GmbH & Co. KG, 23568 Lübeck (DE)
(72) Erfinder: Hüttig, Jörg, 23569 Lübeck (DE); Grolla, Peter, 23562 Lübeck (DE)
(74) Vertreter: Grosse, Wolf-Dietrich Rüdiger

(56) Entgegenhaltungen:
- WO-A1-02/40913
- DE-A1- 10 318 671
- JP-A- 2006 300 293

## Beschreibung

Die Erfindung betrifft ein Zentralschmierverteilersystem an insbesondere einer eine speicherprogrammierbare Steuerung aufweisenden Thermoformmaschine zur Versorgung der Schmierstellen mit einem Schmiermittel, wobei ein von einer Schmiermittelquelle versorgter Schmierverteiler über mit einem Druckschalter ausgebildete und sowohl an ihrem zum Schmierverteiler als auch zum Verbraucher hin gewandten Ende ein Sperrventil aufweisende Schmiermittelleitungen an die einzelnen Verbraucher angeschlossen ist.

Die im Stand der Technik hinlänglich bekannten Zentralschmierungen versorgen über einen Schmierverteiler kontinuierlich oder zyklisch alle Reibungsstellen, wie die beweglichen Teile, insbesondere Lager, einer Maschineneinheit aus einer zentralen Schmiermittelquelle.

Bei einer durch die DE 103 18 671 A1 bekannt gewordenen Zentralschmierung der eingangs genannten Art wird der Schmierstoff ausgehend von einer Schmierstoffpumpe durch Progressivverteiler mit fortschreitender Betätigung der Dosierkolben an Endleitungen abgegeben. Diese weisen vorgeschaltet zu den Schmierstoffabnahmestellen bzw. Verbrauchern jeweils ein Vorspannventil auf, die vor ihren Eingängen einen an einer Feder einstellbaren Druck oberhalb Pmin aufrecht halten. Um Folgeschäden aufgrund eines Leitungsbruchs oder einer Leitungsblockade vermindern zu können, ist in jeder Schmierstoffleitung jeweils ein als Drucksensor ausgebildeter Leitungsdruckwächter vorgesehen und über eine Signalleitung mit einer zentralen Auswerteinrichtung verbunden. An den Progressivverteilern sind außerdem eingangsseitig und / oder ausgangsseitig Überdruckventile vorgesehen, die öffnen, sobald der Druck in einer Schmierstoffleitung einen vorbestimmten Maximalwert übersteigt.

Die den Wartungs- und Reparaturaufwand einer Maschineneinheit verringernden Zentralschmierungen verwenden als Schmiermittel beispielsweise Schmier- oder Fließfett, wobei durch den Schmierverteiler eine gezielte und exakte Dosierung ermöglicht wird.

Eine solche Maschineneinheit ist beispielsweise eine aus der DE 1 98 48 627 B4 oder der EP 2 143 550 B1 bekannt gewordene Thermoformmaschine mit einer speicherprogrammierbaren Steuerung zum Stanzen von tiefgezogenen, beliebigen becher- oder deckelartigen Artikeln aus thermoplastisch verformbaren Kunststoff-Folien.

Die speicherprogrammierbare Thermoformmaschine umfasst weiterhin einen intermittierenden Folientransport, ein oberhalb der Folienbahn angeordnetes Oberwerkzeug und einen unterhalb der Folienbahn in einem Schwenkrahmen ausschwenkbaren Formtisch zur Aufnahme eines kombinierten Form- und Stanzwerkzeuges. Zur Schwenkbarkeit des Formtisches besitzt dieser Lagerzapfen, deren Lager in je einem vertikal geführten Führungstisch angeordnet sind. Weiterhin ist der Formtisch über einen kurvengesteuerte Kniehebel aufweisenden Schubkurbelantrieb an einen Antrieb angeschlossen.

Die speicherprogrammierbare Thermoformmaschine weist zur Versorgung der vorgenannten, diversen Lager und beweglichen Bauteile eine Zentralschmierung mit einem Schmierverteiler auf.

Die entsprechenden Lager- und Reibstellen sind an Schmiermittelleitungen bzw. - schläuche angeschlossen, über die diese Lager- und Reibstellen ausgehend von dem Schmierverteiler bei Bedarf oder in vorgegebenen Zeitabständen mit Schmiermittel versorgt werden. Aufgrund von Rohr- oder Schlauchleitungsabrissen, Verstopfungen und/oder Undichtigkeiten in den Schmiermittelleitungen kommt es immer wieder zu größeren Schäden in der Kinematik der Thermoformmaschine, wenn die Lager- und Reibstellen nicht mehr ausreichend mit Schmiermittel versorgt werden.

Diese Schäden sind bislang nur durch tägliche manuelle und optische Kontrolle der Schmiermittelleitungen und Leitungsanschlüsse festzustellen. Da einerseits aber der Leitungsverlauf in der komplexen Peripherie der Thermoformmaschine optisch nicht mehr verfolgbar ist, insbesondere im Bereich der Formtischkurven behindern Abdeckbleche eine Sichtkontrolle, und andererseits der Personalbestand in der modernen Fertigung meist zu gering ist, um diese Überwachung durchzuführen, bietet diese Art der Überwachung keine ausreichende Sicherheit vor Schäden aufgrund mangelhafter Schmierung infolge eines Defektes der Schmiermittelzufuhr.

Der Erfindung liegt daher die Aufgabe zugrunde, bei einer gattungsgemäßen Zentralschmierung eine Drucküberwachung der Schmiermittelleitungen derart zu verbessern, dass diese zuverlässig und schnell bei möglichst geringem Personaleinsatz die Schmiermittelzufuhr zu den einzelnen Lager- und Reibstellen überwacht.

Die Aufgabe wird erfindungsgemäß durch die im kennzeichnenden Teil des unabhängigen Anspruchs angegebenen Merkmale gelöst.

Während der Schmiertakte bzw. -intervalle, bei denen das Volumen und die Menge des Schmiermittels vom Schmierverteiler vorgegeben wird, sind beide Rückschlagventile zu den Verbrauchern hin geöffnet, wodurch die Verbraucher, d.h. die Lager bzw. beweglichen Teile der Thermoformmaschine, mit einer exakt dosierten Menge des Schmiermittels versorgt werden. Trotz der die für die Drucküberprüfung in jeder Schmierleitung ein geschlossenes System herstellenden Rückschlagventile wird die Schmiermittelzufuhr somit gewährleistet.

Nach erfolgtem Schmiertakt wird von der Schmierquelle kein Schmiermittel mehr gefördert, so dass über den Schmierverteiler auch kein Systemdruck mehr aufgebaut wird und sowohl die dem Schmierverteiler zugeordneten Rückschlagventile als auch die den Verbrauchern zugeordneten Rückschlagventile schließen, wobei innerhalb der Schmiermittelleitungen, zwischen den geschlossenen Rückschlagventilen des Schmierverteilers und den geschlossenen Rückschlagventilen der Verbraucher, weiterhin ein Ruhedruck ansteht.

Durch das Schließen der verteiler- und verbraucherseitigen Rückschlagventile zur Drucküberwachung außerhalb der Schmierintervalle werden also geschlossene Schmierleitungen erreicht, die eine exakte Überwachung des Schmiermittel-Ruhedrucks innerhalb der Schmiermittelleitungen ermöglichen, da während der Ruhedruckphase kein Schmiermittel mehr zu den Verbrauchern gelangt bzw. abfließt, welches die Drucküberwachung verfälschen bzw. beeinflussen würde.

Sowohl während des Schmierintervalls als auch in den dazwischen liegenden zyklusfreien Zeiträumen wird der minimal und maximal herrschende Druck innerhalb der Schmiermittelleitungen von den Druckschaltern, die vorzugsweise mit Drucksensoren zur Erfassung des Schmiermitteldruckes ausgebildet sind, permanent überwacht.

Die fortlaufende Ermittlung der Druckwerte gibt Aufschluss darüber, ob in den Schmiermittelleitungen ein konstanter Druck, ein Druckanstieg oder ein Druckabfall herrscht, wobei die entsprechenden Druckwerte an eine beispielsweise zentrale Kontrolleinheit übermittelt werden, was es ermöglicht, die einzelnen Schmiermittelleitungen von einer externen Stelle her zu überwachen. Eine manuelle und/oder optische Kontrolle bzw. Überwachung durch das Bedienpersonal ist somit überflüssig. Vielmehr wird bei entsprechender Auswertung und daraus resultierenden Signalwerten, die als Eingangsgröße der speicherprogrammierbaren Steuerung der Thermoformmaschine zugeführt werden, eine voll automatische Betriebsweise erreicht.

Eine bevorzugte Ausgestaltung der Erfindung sieht vor, dass die den maximalen Druck überwachenden ersten Druckschalter bei Druck-Überschreitungen und die den minimalen Druck überwachenden zweiten Druckschalter bei Druck-Unterschreitungen schalten und ein Störsignal in die Steuerung geben.

Über die Druckschalter kann sowohl eine positive als auch eine negative Abweichung des in der jeweiligen Schmiermittelleitung herrschenden Druckes von einem frei vorgegebenen Sollwert ermittelt werden. Auf diese Weise kann nicht nur festgestellt werden, ob eine Leckage - negative Druckabweichung - vorliegt, sondern auch, ob z.B. eine Schmierleitung verstopft ist - positive Druckabweichung.

Sowohl bei den im Fall einer Drucküberschreitung als auch bei den im Fall einer Druck-Unterschreitung ansprechenden Druckschaltern wird durch einen Kontaktschalter ein Stromkreis geschlossen und einhergehend damit ein Signal als Eingangsgröße der speicherprogrammierbaren Steuerung der Thermoformmaschine zugeführt.

Dieses Signal bzw. diese Eingangsgröße wird innerhalb der speicherprogrammierbaren Steuerung verarbeitet und führt zu entsprechenden Ausgangssignalen, wobei in einem ersten Schritt eine optische oder akustische Warnung die Bedienperson auf eine akute Leckage bzw. eine Verstopfung aufmerksam machen kann. Wird der Fehler nicht innerhalb eines bestimmten Zeitfensters behoben oder die Thermoformmaschine zur Überprüfung abgeschaltet, so erfolgt in einem zweiten Schritt die Notabschaltung der Thermoformmaschine, um weitergehende Schäden zu vermeiden.

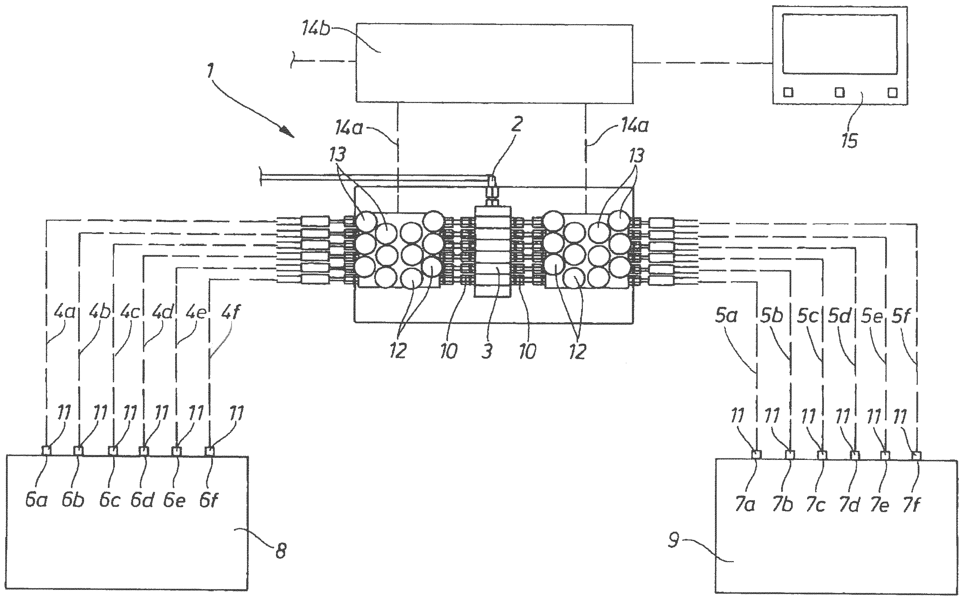

Weitere Einzelheiten und Merkmale der Erfindung ergeben sich aus den Ansprüchen und der nachfolgenden Beschreibung eines in der einzigen Figur dargestellten Ausführungsbeispiels der Erfindung.

Die Figur zeigt ausschnittweise und in schematischer Darstellung den Aufbau eines Schmiermittelverteilersystems 1 einer Zentralschmierung, wie es prinzipiell bei einer nicht dargestellten Thermoformmaschine verwendet wird, um Lager- und Reibstellen in Form von Schwingen, Kniehebeln und Kurvenrollen mit Schmiermittel zu versorgen.

Ausgehend von einem nicht dargestellten Schmiermitteltank wird das Schmiermittel, beispielweise Schmier- oder Fließfett, über eine Zuleitung 2 einem Schmierverteiler 3 zugeführt, von dem aus über Schmiermittelleitungen 4a-f und 5a-f die Lager- und Reibstellen 6a-f und 7a-f, die der Einfachheit halber schematisch in jeweils einem Anschlussblock 8, 9 zusammengefasst dargestellt sind, mit Schmiermittel versorgt werden können.

Der Anschluss jeder Schmiermittelleitung 4a-f und 5a-f an den Schmierverteiler 3 wird durch ein Rückschlagventil 10 gebildet, wobei der Öffnungsdruck des Rückschlagventils 10 in etwa 2,5 bar beträgt, während der vom Schmierverteiler 3 vorgegebene Systemdruck bei ca. 20 bar liegt.

Der Anschluss jeder Schmiermittelleitung 4a-f und 5a-f an die Lager- und Reibstellen 6a-f und 7a-f erfolgt ebenfalls über ein Rückschlagventil 11, welches gegenüber dem Rückschlagventil 10 des Schmierverteilers 3 einen höheren Öffnungsdruck von etwa 10 bar benötigt.

Um überwachen zu können, ob die Schmiermittelzufuhr über die Schmiermittelleitungen 4a-f und 5a-f ordnungsgemäß erfolgt, d.h. ob keine Leckage vorliegt, ist jede Schmiermittelleitung 4a-f und 5a-f mit einem ersten Druckschalter 12 und einem zweiten Druckschalter 13 ausgestattet, die zwischen den Rückschlagventilen 10 und 11 angeordnet sind.

Die Druckschalter 12 und 13 überwachen den maximal und den minimal in den Schmiermittelleitungen 4a-f und 5a-f herrschenden Druck, wobei die ersten Druckschalter 12 bei Druck-Überschreitung und die zweiten Druckschalter 13 bei Druck-Unterschreitung von einem jeweils vorgegebenen Soll-Wert schalten und ein Störsignal 14a in die als "Black-Box" dargestellte speicherprogrammierbare Steuerung 14b geben.

Die Funktionsweise einer solchermaßen ausgebildeten Drucküberwachungseinrichtung wird im folgenden näher erläutert.

Das dem Schmierverteiler 3 über die Zuleitung 2 zugeführte Schmiermittel wird mit einem Druck auf die einzelnen Schmiermittelleitungen 4a-f und 5a-f aufgegeben, der oberhalb des Öffnungsdruckes (> 10 bar) der als Anschluss an die einzelnen Schmiermittelleitungen 4a-f und 5a-f dienenden Rückschlagventile 11 liegt.

Nach Beendigung des Schmiertaktes bzw. -intervalls schließen die Rückschlagventile 11 und es stellt sich in den Schmiermittelleitungen 4a-f und 5a-f ein Ruhedruck ein, der die Rückschlagventile 10 des Schmierverteilers 3 schließt.

Die für Druck-Unterschreitungen zuständigen zweiten Druckschalter 13 überwachen nun, ob dieser Ruhedruck konstant bleibt. Ein Absinken des Ruhedrucks könnte ein Anzeichen dafür sein, dass an einer Stelle der Schmiermittelleitungen 4a-f und 5a-f eine Leckage vorliegt. Sobald ein solcher Druckabfall in einer Schmiermittelleitung 4a-f und 5a-f vorliegt, schließt ein Schaltkontakt des entsprechenden Druckschalters 13, wodurch ein Stromkreis geschlossen und ein entsprechendes Signal 14a als Eingangsgröße der speicherprogrammierbaren Steuerung 14b zugeführt wird. Dieses den Druckabfall übermittelnde Signal 14a kann nun einerseits dazu verwendet werden, als optische Warnmeldung auf einem Bedien- und Kontrollpanel 15 einer Bedienperson der Thermoformmaschine angezeigt zu werden und andererseits bei Nichtbeachtung der Warnmeldung die Thermoformmaschine ganz abzuschalten.

Ebenso wie bei dem geschilderten Druckabfall von Ruhedruck verhält es sich, wenn während des Schmiertaktes der höhere Schmierdruck absinkt.

Neben den negativen Druckabweichungen kann es auch zu positiven Druckabweichungen sowohl während des Schmiertaktes als auch beim in den Schmierleitungen 4a-f und 5a-f herrschenden Ruhedruck kommen, wenn beispielsweise durch Ablagerungen die Schmierleitungen 4a-f und 5a-f oder ein Anschluss an eine Schmierstelle verstopft sind. Da auch eine Verstopfung der Schmiermittelleitungen 4a-f und 5a-f eine unzureichende Schmierung der Lager- und Reibstellen 6a-f und 7a-f oder eine Beschädigung der Schmiermittelleitungen 4a-f und 5a-f durch einen zu hohen Druck zur Folge haben kann, wird eine solche Druck-Überschreitung von den ersten Druckschaltern 12 überwacht.

Liegt nun in den Schmiermittelleitungen 4a-f und 5a-f eine positive Druckabweichung bzw. eine Druck-Überschreitung vor, schließt ein Schaltkontakt des entsprechenden Druckschalters 12, wodurch ein Stromkreis geschlossen und ein entsprechendes Signal 14a als Eingangsgröße der speicherprogrammierbaren Steuerung 14b zugeführt wird. Mit diesem nun eine Druck-Überschreitung übermittelnden Signal 14a wird wiederum eine optische Warnmeldung auf dem Bedien- und Kontrollpanel 15 angezeigt und bei Nichtbeachtung der Warnmeldung die Thermoformmaschine vollständig abgeschaltet.

Insgesamt zeichnet sich die Drucküberwachungsvorrichtung dadurch aus, dass vollständig auf eine manuelle und/oder optische Überwachung der Schmiermittelleitungen 4a-f und 5a-f verzichtet werden kann, wie dieses aus der bisherigen Praxis bekannt ist.

### Bezugszeichenliste:

- 1: Schmiermittelverteilersystem
- 2: Zuleitung
- 3: Schmierverteiler
- 4a-f: Schmiermittelleitung
- 5a-f: Schmiermittelleitung
- 6a-f: Lager- und Reibstelle
- 7a-f: Lager- und Reibstelle
- 8: Anschlussblock
- 9: Anschlussblock
- 10: Rückschlagventil
- 11: Rückschlagventil
- 12: erster Druckschalter
- 13: zweiter Druckschalter
- 14a: Signal
- 14b: speicherprogrammierbare Steuerung
- 15: Bedien- und Kontrollpanel

## Patentansprüche

1. Zentralschmierverteilersystem (1) an insbesondere einer eine speicherprogrammierbare Steuerung (14b) aufweisenden Thermoformmaschine zur Versorgung der Schmierstellen (6a-f, 7a-f) mit einem Schmiermittel, wobei ein von einer Schmiermittelquelle versorgter Schmierverteiler (3) über mit einem Druckschalter ausgebildete und sowohl an ihrem zum Schmierverteiler (3) als auch zum Verbraucher (6a-f, 7a-f) hin gewandten Ende ein Sperrventil aufweisende Schmiermittelleitungen (4a-f, 5a-f) an die einzelnen Verbraucher angeschlossen ist,
**dadurch gekennzeichnet,**
**dass** jede Schmiermittelleitung (4a-f, 5a-f) als ein geschlossenes System mit Rückschlagventilen (10, 11) als Sperrventile ausgebildet ist, wobei jeder Schmiermittelleitung (4a-f, 5a-f) zugeordnete erste und zweite Druckschalter (12, 13) den minimalen und maximalen Druck in den Schmiermittelleitungen (4a-f, 5a-f) überwachen, und wobei die dem Schmierverteiler (3) zugeordneten Rückschlagventile (10) in Durchflussrichtung des Schmierverteilers (3) vor den Druckschaltern (12, 13) und die den Verbrauchern zugordneten Rückschlagventile (11) hinter den Druckschaltern (12, 13) angeordnet sind und wobei die verteilerseitigen Rückschlagventile (10) und die verbraucherseitigen Rückschlagventile (11) während eines Schmierintervalls zur Versorgung der Verbraucher (6a-f, 7a-f) mit dem Schmiermittel geöffnet und außerhalb der Schmierintervalle zur Drucküberwachung der Schmiermittelleitungen (4a-f, 5a-f) geschlossen sind.

2. Zentralschmierverteilersystem nach Anspruch 1,
**dadurch gekennzeichnet,**
**dass** die den maximalen Druck überwachenden ersten Druckschalter (12) bei Druck-Überschreitungen und die den minimalen Druck überwachenden zweiten Druckschalter (13) bei Druck-Unterschreitungen schalten und ein Störsignal (14a) in die Steuerung (14b) geben.

## Claims

1. A central lubrication distribution system (1), in particular on a thermoforming machine having a programmable logic controller (14b), for supplying the lubrication points (6a-f, 7a-f) with a lubricant, a lubrication distributor (3), supplied by a lubricant source, being connected to the individual consumers via lubricant lines (4a-f, 5a-f), which are constructed with a pressure switch and have a shut-off valve both at their end facing the lubrication distributor (3) and at their end facing the consumer (6a-f, 7a-f),
**characterized**
**in that** each lubricant line (4a-f, 5a-f) is constructed as a closed system with non-return valves (10, 11) as shut-off valves, wherein first and second pressure switches (12, 13) assigned to each lubricant line (4a-f, 5a-f) monitor the minimum and maximum pressure in the lubricant lines (4a-f, 5a-f), and wherein the non-return valves (10) assigned to the lubrication distributor (3) are arranged upstream of the pressure switches (12, 13) in the direction of flow of the lubrication distributor (3) and the non-return valves (11) assigned to the consumers are arranged downstream of the pressure switches (12, 13) and wherein the distributor-side non-return valves (10) and the consumer-side non-return valves (11) are open during a lubrication interval for supplying the consumers (6a-f, 7a-f) with the lubricant and are closed outside of the lubrication intervals for pressure monitoring of the lubricant lines (4a-f, 5a-f).

2. The central lubrication distribution system according to Claim 1,
**characterized**
**in that** the first pressure switches (12) monitoring the maximum pressure switch in the event of pressure exceedances and the second pressure switches (13) monitoring the minimum pressure switch in the event of pressure shortfalls, and transmit an interference signal (14a) to the controller (14b).

## Revendications

1. Système distributeur d'une lubrification centralisée (1) vers notamment une machine de thermoformage comportant un système de commande à programme enregistré (14b), destiné à alimenter les points de lubrification (6a-f, 7a-f) avec un agent lubrifiant, un distributeur de lubrifiant (3) alimenté par une source d'agent lubrifiant étant raccordé sur les consommateurs individuels par l'intermédiaire de conduits d'agent lubrifiant (4a-f, 5a-f) conçus avec un interrupteur à pression et comportant une soupape d'arrêt sur leur extrémité dirigée vers le distributeur de lubrifiant (3) ainsi que vers les consommateurs (6a-f, 7a-f),
**caractérisé en ce que**
chaque conduit d'agent lubrifiant (4a-f, 5a-f) est conçu sous la forme d'un système fermé, doté de clapets antiretour (10, 11) en tant que soupape d'arrêt, des premiers et deuxièmes interrupteurs à pression (12, 13) affectés à chaque conduit d'agent lubrifiant (4a-f, 5a-f) supervisant la pression minimale et maximale dans les conduits d'agent lubrifiant (4a-f, 5a-f) et les clapets antiretour (10) affectés au distributeur de lubrifiant (3) étant placés à l'avant des interrupteurs à pression (12, 13), dans le sens de circulation du distributeur de lubrifiant (3) et les clapets antiretour (11) affectés aux consommateurs étant placés à l'arrière des interrupteurs à pression (12, 13) et les clapets antiretour (10) placés du côté distributeur, ainsi que les clapets antiretour (11) placés du côté consommateurs étant ouverts pendant un intervalle de lubrification destiné à alimenter en agent lubrifiant les consommateurs (6a-f, 7a-f), et étant fermés hors des intervalles de lubrification, pour la supervision de la pression des conduits d'agent lubrifiant (4a-f, 5a-f).

2. Système distributeur d'une lubrification centralisée selon la revendication 1,
**caractérisé en ce que**
lors de dépassements de pression, les premiers interrupteurs à pression (12) supervisant la pression maximale et lors de non-atteintes de la pression, les deuxièmes interrupteurs à pression (13) supervisant la pression minimale commutent et adressent un signal de perturbation (14a) au système de commande (14b).
